# EUROPÄISCHE PATENTANMELDUNG

(11) **EP 1 665 924 A1**
(43) Veröffentlichungstag der Anmeldung: **07.06.2006**
(21) Anmeldenummer: 04106331.4
(22) Anmeldetag: 06.12.2004
(51) Int. Cl.: A01K 1/015

(54) **Stalleinstreumaterialien**

(71) Anmelder: GFR Gesellschaft für die Aufbereitung und Verwertung von Reststoffen mbH, 97080 Würzburg (DE)
(72) Erfinder: Demmich, Jörg, 97084 Würzburg (DE); Weissflog, Eckhard, 97234 Reichenberg-Lindflur (DE); Leuchs, Matthias, 97072 Würzburg (DE)
(74) Vertreter: von Kreisler Selting Werner

(57) **Zusammenfassung**

Stalleinstreumaterial enthaltend
a) Calciumverbindungen,
b) Celluloseschnitzeln, Cellulosefasern, Celluloseflocken und/oder ein Mineralstoffgemisch,
c) silikatische und/oder aluminatische Verbindungen.

## Beschreibung

Stalleinstreumaterialien werden verwendet um in Ställen, insbesondere Rinder-/Milchkuh-, Pferde, Schweine- und Geflügelställen, die hygienischen Bedingungen und die Rutschfestigkeit zu verbessern. Auch wenn das Hauptanwendungsgebiet des Einstreumaterials in Ställen liegt, kann es auch auf Freilaufflächen z.B. bei der Geflügelzucht und bei der Eierproduktion eingesetzt werden.

Typische herkömmliche Materialien hierfür sind Stroh und Holzspäne, oft in Kombination mit Branntkalk, die jedoch einen sehr hohen pH-Wert aufweisen können und/oder sehr scharfkantig sind und somit bei den Tieren zu Verletzungen führen können. Bei den handelsüblichen anorganischen Stalleinstreumaterialien handelt es sich häufig um ein Gemisch aus Kalkstein (Calciumcarbonat) mit hohen Branntkalkanteilen und gegebenenfalls Zusätzen weiterer chemischer Hilfsstoffe. Häufig enthalten handelsübliche Stalleinstreumaterialien zur Desinfektion höhere Schwermetallgehalte insbesondere in Form von Kupfer- und/oder Zinksalzen. Da diese Stalleinstreumaterialien über die Gülle letztlich auf landwirtschaftlichen Flächen ausgebracht werden, belasten diese Schwermetallgehalte Boden und Grundwasser.

Aufgabe der vorliegenden Erfindung war es, ein Stalleinstreumaterial zur Verfügung zu stellen, das gegenüber den handelsüblichen Materialien verbesserte Eigenschaften aufweist.

Gelöst wird die Aufgabe durch ein Stalleinstreumaterial bestehend aus einer Kombination folgender Bestandteile
a) feinteiligen Calciumverbindungen,
b) Celluloseschnitzeln, Cellulosefasern, Celluloseflocken und/oder ein Mineralstoffgemisch,
c) feinkörnigen silikatische und/oder aluminatische Verbindungen,

Das Mineralstoffgemisch dient unter anderem der zusätzlichen Verbesserung der Wassereinbindung, der Rutschfestigkeit und/oder der Verbesserung des Stallmilieus. Es wird in Ergänzung oder im Austausch zu Celluloseschnitzeln oder Cellulosefasern oder Celluloseflocken eingesetzt. Gegenüber anderen Stalleinstreuprodukten ist das erfindungsgemäße Stalleinstreumaterial arm an Schwermetallen sowie frei von sonstigen toxischen Hygienisierungsstoffen.

Besonders vorteilhaft ist auch, dass das erfindungsgemäße Stalleinstreumaterial ein zugelassenes Düngemittel ist, so dass durch die anschließend gemeinsame Ausbringung dieses Material mit der Gülle auf landwirtschaftlichen Flächen ein zusätzlicher Düngeeffekt und darüber hinaus keine zusätzliche Boden- oder Grundwasserverunreinigung erfolgt.

Es wurde festgestellt, dass durch das erfindungsgemäße Stalleinstreumaterial hervorragende Werte hinsichtlich der Rutschfestigkeit der Stallböden und Kuhmatten sowie des Wasserbindevermögens erreicht werden. Zusätzlich wird durch das Wasserbindevermögen auch eine deutliche Unterdrückung der Keimbildung auf den Lauf- und Liegeflächen der Ställe erreicht. Dies führt zu einer Verbesserung der Tiergesundheit und zu einer Verbesserung der Stallabluft durch eine Verringerung der Luftkeimzahl.

Als erfindungsgemäß eingesetzte Calciumverbindungen eignen sich insbesondere kristallwasserfreies oder kristallwasserhaltiges Calciumsulfat. Entsprechende calciumhaltige Mittel können besonders preisgünstig aus industriellen Nebenprodukten erhalten werden. So lassen sich beispielsweise Gipsstäube oder körnige Fraktionen aus der Steinegewinnung und/oder der Baustoffproduktion einsetzen.

Als Celluloseschnitzel oder Cellulosefasern oder Celluloseflocken können beispielsweise Kartonschnitzel aus dem Recycling von Gipsplatten, Fasern aus der Gipsfaserplattenproduktion, Papierfasern aus der Altpapieraufbereitung oder Papierfaserschlämme eingesetzt werden.

Als feinkörnige silikatische und/oder aluminatische Verbindungen können grundsätzlich Mineralien beispielsweise Bausande oder Brechsande, aber auch Feinperlite, Aschen aus Kohlefeuerungsanlagen oder sonstige siliziumdioxidhaltige Nebenprodukte aus der chemischen Produktion eingesetzt werden. So lassen sich beispielsweise körnige Fraktionen aus der Steinegewinnung und/oder der Baustoffproduktion einsetzen.

Durch Zugabe eines Mineralstoffgemisches können die Eigenschaften noch zusätzlich verbessert werden. Das Mineralstoffgemisch enthält Calciumoxid oder Calciumhydroxid, Calciumsulfithalbhydrat, Calciumcarbonat und/oder Calciumchlorid. So lassen sich beispielsweise Entschwefelungsprodukte aus quasitrockenen und trockenen Rauchgasreinigungsanlagen oder Wirbelschichtfeuerungsaschen von Kohlekraftwerken einsetzen. Das Mineralstoffgemisch kann in diesem Fall auch wasserfreies und kristallwasserhaltiges Calciumsulfat enthalten.

Der Gehalt an Calciumverbindungen im erfindungsgemäßen Stalleinstreumaterial beträgt vorzugsweise 1 bis 40 Massen-%, mehr bevorzugt 3 bis 30 Massen-%. Bevorzugte Anteile an Celluloseschnitzeln oder Cellulosefasern oder Celluloseflocken liegen im Bereich von 0,1 bis 90 Massen-%, vorzugsweise 50 bis 90 Massen-% und besonders bevorzugt 70 bis 90 Massen-%.

Typische Mengen für die feinkörnigen silikatischen bzw. aluminatischen Verbindungen liegen im Bereich von 0,1 bis 30 Massen-%, vorzugsweise 5 bis 25 Massen-% und besonders bevorzugt 10 bis 20 Massen-%.

Vom Mineralstoffgemisch, das vorzugsweise in Kombination oder anstelle von Celluloseschnitzeln oder Cellulosefasern oder Celluloseflocken zusätzlich eingesetzt wird, kommen typischerweise Anteile von 0,1 bis 95 Massen-% zum Einsatz.

Typische Zusammensetzungen für das Mineralstoffgemisch liegen in den Bereichen von
- Calciumoxid oder Calciumhydroxid 0,5 bis 45 Massen-%, bezogen auf CaO,
- Calciumsulfithalbhydrat 16 bis 70 Massen-%, bezogen auf CaS0₃ x 0,5 H₂O,
- Calciumcarbonat 0,5 bis 30 Massen-%, bezogen auf CaCO₃,
- Calciumchlorid 0,1 bis 5 Massen-%, bezogen auf CaCl₂,
- andere Mineralien, z.B. silikatische/aluminatische Verbindungen bzw. Verunreinigungen max. 5 Massen-%.

Weiterhin kann ein handelsüblicher Aromastoff zur Geruchsverbesserung enthalten sein. Der Anteil des handelsüblichen Aromastoffs am Stalleinstreumaterial beträgt zwischen 0 und 2 Massen-%.

In einer weiteren bevorzugten Ausführungsform kann das Stalleinstreumaterial zur Vermeidung der Staubentwicklung mit geringen Mengen Wasser versetzt sein. Typische Mengen liegen hier im Bereich von 0,1 bis 15 Massen-%.

Die bevorzugten Korngrößen für die mineralischen Komponenten Calciumverbindungen, Mineralstoffgemisch und silikatische und/oder aluminatische Verbindungen liegen zu über 90% im Bereich von 0,001 bis 10 mm, vorzugsweise 0,001 bis 5 mm und besonders bevorzugt 0,001 bis 3 mm. Die bevorzugten Korngrößen für die Celluloseschnitzeln oder Cellulosefasern oder Celluloseflocken liegen zu über 90% im Bereich von 0,1 bis 150 mm, mehr bevorzugt 0,1 bis 80 mm und besonders bevorzugt 0,1 bis 40 mm.

Das erfindungsgemäße Stalleinstreumaterial kann mindestens die Hälfte seines Eigengewichtes an Feuchtigkeit aufnehmen, ohne dass Wasser abtropft. Bevorzugt kann es jedoch die gleiche Menge an Gewicht, mehr bevorzugt sogar das Doppelte seines Gewichtes ohne Abtropfen aufnehmen.

Das erfindungsgemäße Stalleinstreumaterial kann als zugelassenes Düngemittel oder Bodenhilfsstoff nach Gebrauch zusammen mit Wirtschaftsdüngern wie Gülle oder Mist auf landwirtschaftlichen Flächen aufgebracht werden, da es auf Grund seiner Inhaltsstoffe weder zur Boden- noch zur Grundwasserverunreinigung beiträgt. Dabei stehen die Inhaltstoffe, insbesondere Calcium und Schwefel, als Pflanzennährstoffe in leicht aufnehmbarer Form zur Verfügung.

Untersuchungen haben ergeben, dass durch das erfindungsgemäße Stalleinstreumaterial Biogasanlagen in ihrer Wirkungsweise nicht beeinträchtigt werden.

Das erfindungsgemäße Stalleinstreumaterial kann als Siloware, Kipper-LKW-Ladung, in Big-Bags, in Säcken oder in Eimern vertrieben werden.

Die Erfindung wird durch die nachfolgenden Beispiele weiter erläutert.

### Beispiel 1

80 bis 90 Massen-% Celluloseschnitzel aus der Gipsplattenaufbereitung, an denen 5 bis 10 Massen-% Gips (Calciumverbindung) anhaften, werden mit 10 bis 20 Massen-% Mineralstoffgemisch, mit 1 bis 5 Massen-% Silikat (unter Anrechnung des im Mineralstoffgemisch vorhandenen Anteils) und mit 0 bis 2 Massen-% Aromastoff vermischt.

Die Versuchsauswertung ergab ein sehr gutes Aufsaugverhalten bei hoher Rutschfestigkeit auf dem Stalleinstreumaterial. Das verbrauchte Aufsaugmaterial wies einen neutralen Geruch auf.

### Vergleichsbeispiel zu 1:

Im Stall wurden gleiche Gewichtsanteile Stroh/Holzspäne eingebracht. Das Aufsaugverhalten der Stoffe war deutlich geringer als das des erfindungsgemäßen Stalleinstreumaterials bei gleichzeitig niedrigerer Rutschfestigkeit.

### Beispiel 2

80 bis 95 Massen-% Mineralstoffgemisch wurden mit 5 bis 20 Massen-% Gipsschleifstaub (Calciumverbindung) und mit 0 bis 2 Massen-% Aromastoff vermischt. Eine Zugabe von silikatischen/aluminatischen Verbindungen war nicht notwendig, da das Mineralstoffgemisch schon einen ausreichenden Restgehalt dieser Verbindungen als Verunreinigung enthielt.

Die Versuchsauswertung ergab ein sehr gutes Aufsaugverhalten bei hoher Rutschfestigkeit auf dem Stalleinstreumaterial. Das verbrauchte Aufsaugmaterial wies einen angenehmen Geruch auf. Durch die geringen Anteile an basischen Komponenten im Mineralstoffgemisch konnte zudem keine Reizung des Kuheuters festgestellt werden.

### Vergleichsbeispiel zu 2:

Im Stall wurde ein handelsübliches Stalleinstreupulver vergleichbarer Konsistenz eines Konkurrenten eingebracht. Das Aufsaugverhalten des Pulvers war deutlich geringer als das des erfindungsgemäßen Stalleinstreumaterials bei gleichzeitig niedrigerer Rutschfestigkeit. Die hohen Anteile basischer Komponenten verursachten zudem starke Reizung des Kuheuters. Vom verbrauchten Stalleinstreumaterial ging zudem ein unangenehmer, starker Ammoniakgeruch aus.

## Patentansprüche

1. Stalleinstreumaterial enthaltend
a) Calciumverbindungen,
b) Celluloseschnitzeln, Cellulosefasern, Celluloseflocken und/oder ein Mineralstoffgemisch,
c) silikatische und/oder aluminatische Verbindungen.

2. Stalleinstreumaterial nach Anspruch 1, **dadurch gekennzeichnet, dass** die silikatischen und/oder aluminatischen Verbindungen im Mineralstoffgemisch enthalten sind.

3. Stalleinstreumaterial nach einem der Ansprüche 1 oder 2, **dadurch gekennzeichnet, dass** es sich bei den Calciumverbindungen um kristallwasserfreies und/oder kristallwasserhaltiges Calciumsulfat handelt.

4. Stalleinstreumaterial nach mindestens einem der Ansprüche 1 bis 3, **dadurch gekennzeichnet, dass** es sich bei den Celluloseschnitzeln, Cellulosefasern oder Celluloseflocken um Kartonschnitzel aus dem Recycling von Gipsplatten, Fasern aus der Gipsfaserplattenproduktion, Papierfasern aus der Altpapieraufbereitung oder Papierfaserschlämme handelt.

5. Stalleinstreumaterial nach mindestens einem der Ansprüche 1 bis 4, **dadurch gekennzeichnet, dass** es sich bei den feinkörnigen silikatischen und/oder aluminatischen Verbindungen um Mineralien wie Brechsand, Bausand, Feinperlite, Aschen aus Kohlefeuerungsanlagen oder um siliziumdioxidhaltige Nebenprodukte aus der chemischen Produktion handelt.

6. Stalleinstreumaterial nach mindestens einem der Ansprüche 1 bis 5, **dadurch gekennzeichnet, dass** das Mineralstoffgemisch Komponenten ausgewählt aus der Gruppe Calciumoxid- oder Calciumhydroxid, Calciumsulfithalbhydrat, Calciumcarbonat, Calciumchlorid und Mischungen davon.

7. Stalleinstreumaterial nach mindestens einem der Ansprüche 1 bis 6,
**dadurch gekennzeichnet, dass**
- der Gehalt an Calciumverbindungen 1 bis 40 Massen-% beträgt und/oder
- der Anteil an Celluloseschnitzeln, Cellulosefasern oder Celluloseflocken 0,1 bis 90 Massen-% beträgt und/oder
- der Anteil feinkörniger silikatischer und aluminatischer Verbindungen 0,1 bis 30 Massen-% beträgt.

8. Stalleinstreumaterial nach mindestens einem der Ansprüche 1 bis 7, **dadurch gekennzeichnet, dass** der Anteil des Mineralstoffgemisches, das in Kombination mit oder anstelle der Celluloseschnitzel oder Cellulosefasern oder Celluloseflocken eingesetzt wird, 0,1 bis 95 Massen-% beträgt.

9. Stalleinstreumaterial nach mindestens einem der Ansprüche 1 bis 8, **dadurch gekennzeichnet, dass** das Mineralstoffgemisch folgende Komponenten enthält:
- Calciumoxid oder Calciumhydroxid 0,5 bis 45 Massen-%, bezogen auf CaO,
- Calciumsulfithalbhydrat 16 bis 70 Massen-%, bezogen auf CaSO₃ x 0,5 H₂O,
- Calciumcarbonat 0,5 bis 30 Massen-%, bezogen auf CaCO₃,
- Calciumchlorid 0,1 bis 5 Massen-%, bezogen auf CaCl₂.

10. Stalleinstreumaterial nach mindestens einem der Ansprüche 1 bis 9, **dadurch gekennzeichnet, dass** das Stalleinstreumaterial einen Wassergehalt von bis zu 15 Massen-% enthält.

11. Stalleinstreumaterial nach mindestens einem der Ansprüche 1 bis 10, **dadurch gekennzeichnet, dass** die Korngrößen der mineralischen Komponenten Calciumverbindungen, Mineralstoffgemisch und silikatische/aluminatische Verbindungen zu über 90% im Bereich von 0,001 mm bis 10 mm liegen und/oder die Korngrößen der Celluloseschnitzeln oder Cellulosefasern oder Celluloseflocken zu über 90% zwischen 0,1 mm und 150 mm liegen.

12. Stalleinstreumaterial nach mindestens einem der Ansprüche 1 bis 11, **dadurch gekennzeichnet, dass** das Stalleinstreumaterial einen handelsüblichen Aromastoff in einem Anteil zwischen 0 und 2 Massen-% zur Geruchsverbesserung enthält.

13. Verwendung des Stalleinstreumaterials nach einem der Ansprüche 1 bis 12 als Stalleinstreumaterial in:
- einem Viehstall, insbesondere in Rinder-/Milchkuh-, Pferde-, Schweine- und Geflügelställen,
- auf Freilaufflächen, insbesondere bei der Geflügelzucht und bei der Eierproduktion.
